# EUROPÄISCHE PATENTSCHRIFT

(11) **EP 1 128 891 B1**
(45) Veröffentlichungstag und Bekanntmachung des Hinweises auf die Patenterteilung: **26.02.2003**
(21) Anmeldenummer: 99953933.1
(22) Anmeldetag: 26.10.1999
(51) Int. Cl.: B01D 46/24, B01D 46/52, B01D 29/21

(54) **FILTER UND GEHÄUSE MIT DARIN EINGESETZTER RUNDFILTERPATRONE**
FILTER COMPRISING A HOUSING AND CYLINDRICAL FILTER CARTRIDGE USED IN SAID FILTER
FILTRE COMPRENANT UN BOITIER ET CARTOUCHE FILTRANTE RONDE UTILISEE DANS CE FILTRE

(30) Priorität: 30.10.1998 DE 19849998
(43) Veröffentlichungstag der Anmeldung: 05.09.2001
(73) Patentinhaber: FILTERWERK MANN & HUMMEL GmbH, 71631 Ludwigsburg (DE)
(72) Erfinder: SCHNABEL, Werner, D-74747 Ravenstein (DE)
(74) Vertreter: Voth, Gerhard, Dipl.-Ing.
(86) Internationale Anmeldenummer: EP9908066
(87) Internationale Veröffentlichungsnummer: WO00025893

(56) Entgegenhaltungen:
- DE-A- 19 608 589
- GB-A- 2 276 835
- US-A- 5 549 724

## Beschreibung

Die Erfindung betrifft einen Filter, umfassend ein Gehäuse mit darin eingesetzter Rundfilterpatrone nach der Gattung des Patentanspruches 1. Außerdem betrifft die Erfindung eine Rundfilterpatrone, die zum Einsatz in dem beanspruchten Filter geeignet ist, nach der Gattung des unabhängigen Anspruches 8.

Der Aufbau von Filtern, in denen Rundfilterpatronen zum Einsatz kommen, ist aus dem Stand der Technik hinlänglich bekannt. Die Rundfilterpatronen werden in den meisten Fällen von außen nach innen durchströmt, wobei das filtrierte Fluid aus dem zylindrischen Innenraum durch eine Öffnung im Deckel oder Boden der Rundfilterpatrone zum Ausgang des Filtergehäuses geleitet wird. Der Durchmesser der Ausgangsöffnung in der Abdeckung der Rundfilterpatrone ist durch den Durchmesser des Innenraums der Patrone begrenzt. Dieser ergibt sich aus dem Durchmesser der Filterpatrone abzüglich der Faltenhöhe des eingesetzten Filtermediums.

Einerseits erlaubt eine möglichst große Faltenhöhe eine große effektive Filterfläche der Rundfilterpatrone bei gleichbleibenden Außenabmessungen. Andererseits muß die Ausgangsöffnung für das gefilterte Medium einen genügenden Querschnitt aufweisen, um das Fluid ableiten zu können. Bei vorgegebenen Abmessungen der Rundfilterpatrone ist daher zwischen diesen beiden Gestaltungseinflüssen abzuwägen und einen Kompromiß zu finden.

Aus der DE 196 08 589 ist eine kegelige Filterpatrone bekannt. Diese weist den Vorteil auf, daß der Innenraum der Filterpatrone sich kegelig zur Auslaßöffnung an der einen Endscheibe an der eine Filterpatrone hin öffnet. Dies entspricht in günstiger Weise den Durchströmungsverhältnissen an der Filterpatrone, die von der zu fördernden Fluidmenge abhängen. Soll bei einer solchen Patrone jedoch eine gleichmäßige Faltenteilung über die gesamte Höhe der Luftfilterpatrone erreicht werden, muß das Filtermedium vor der Faltung eine kreisförmige Gestalt aufweisen. Dies wirkt sich negativ auf die dadurch verursachten Fertigungskosten der Kegelfilterpatrone aus.

Die Aufgabe der Erfindung besteht daher darin, einen Filter zu schaffen der wirtschaftlich in der Herstellung ist. Gleichzeitig soll aber das Verhältnis zwischen effektiver Filterfläche und Einbauvolumen des Filters optimiert sein. Dabei soll die Auslaßöffnung des Filters derart dimensioniert sein, daß ihre Größe unkritisch gegenüber dem Volumendurchsatz des zu filternden Fluides ist. Außerdem wird gemäß Anspruch 8 eine Rundfilterpatrone beansprucht die diese Aufgabe bei Einbau in ein zugehöriges Gehäuse erfüllt.

### Vorteile der Erfindung

Der erfindungsgemäße Filter besteht aus einem Gehäuse, in das eine Rundfilterpatrone eingebaut ist. Bestandteil der Rundfilterpatrone ist ein Filtermedium, welches aus einem flachen Material, z.B. Vlies oder Papier, besteht, welches faltbar ist. Das Filtermedium ist derart gefaltet, daß die Außenkanten der Filterfalten auf einem Zylindermantel liegen. Die Innenfalten des Filtermediums bilden einen konischen Innenraum in der Rundfilterpatrone. Der Auslaß der Rundfilterpatrone wird vorteilhafterweise auf der Seite vorgesehen, auf der der Innenraum der Rundfilterpatrone den größeren.Durchmesser aufweist. Dadurch wird die konische Aufweitung des Innenraums zum Auslaß hin unter strömungstechnischen Gesichtspunkten optimal genutzt. Das Äußere, also das Einbauvolumen der Rundfilterpatrone weist dagegen eine zylindrische Form auf, wie dies aus dem Stand der Technik bekannt ist. Die erfindungsgemäße Rundfilterpatrone kann daher auch in Gehäuse eingesetzt werden, die für Rundfilterpatronen mit herkömmlichen zylindrischen Innenraum geeignet sind. Voraussetzung hierfür ist natürlich, daß die Anschlußmaße übereinstimmen.

Gemäß einer weiteren Ausgestaltung der Erfindung besteht die Rundfilterpatrone aus einer rechteckigen Filterbahn. Zum einen läßt sich dadurch ein Verschnitt beim Zuschnitt der Filterbahn vermeiden. Das Filtermedium kann z. B. rollenweise verarbeitet werden. Zum andern läßt sich dieser Prozeß leicht automatisieren, da bandförmiges Filtermaterial der Faltmaschine einfach zugeführt werden kann. Zur Herstellung der Rundfilterpatronen werden die Filterbahnen ringförmig zusammengeschlossen. Die Stirnseiten des sich ergebenden zylindrischen Filterkörpers werden dann mit einem Abschluß versehen, von denen mindestens einer die Ausleitung des zu filternden Fluids ermöglicht.

Gemäß einer besonderen Ausführungsform wird das rechteckige Filtermedium in einer Weise gefaltet, das gerade Filterkanten sich mit schrägen Filterkanten abwechseln. Mit gerade ist gemeint, daß die Filterfalten sich in einem rechten Winkel zu dem Rand der Filterbahn befinden, der anschließend die Stirnseite der Rundfilterpatrone bildet. Diese geraden Filterkanten bilden bei der fertigen Filterpatrone dann den zylindrischen Außenmantel. Zwischen den geraden Filterkanten sind schräge Filterkanten vorgesehen, und zwar in der Weise, daß jeweils zwei schräge Filterkanten aufeinander zu liegen kommen, wenn die zwischen ihnen liegende gerade Filterkante zusammengeklappt wird. Durch dieses Faltverfahren bilden sich im Inneren der Rundfilterpatrone schräge Filterkanten aus, die den konischen Innenraum bilden. Die schrägen Filterkanten können entweder von einem Rand der rechteckigen Filterbahn zum andern Rand verlaufen oder beginnend an einem Rand der Filterbahn in die geraden Filterkanten hineinlaufen.

Es ist vorteilhaft bei der erfindungsgemäßen Filterpatrone nur einen Auslaß vorzusehen und zwar auf der Seite, wo der konische Innenraum seinen größten Durchmesser aufweist. Die andere Seite des Innenraums kann durch den Abschluß der Filterpatrone vollständig verschlossen werden. Dies erleichtert die Abdichtung zwischen Rohseite und Reinseite des Filters. Es ist vorteilhaft, die Abschlüsse der Filterpatrone aus PUR- Schaum oder einer aufschäumbaren Klebefolie zu fertigen. Auf diese Weise gelingt eine wirtschaftliche Herstellung der Filterpatronen, indem die Stirnseiten des Filtermediums einfach in die Abschlüsse eingegossen werden bzw. durch Ausdehnung der Abschlüsse verklebt werden. Im übrigen ist eine derart hergestellte Filterpatrone metallfrei und kann deswegen problemlos thermisch entsorgt werden.

In einer Modifikation der Erfindung weist der Innenraum der Filterpatrone ein Stützrohr auf. Dieses kann ebenfalls in die Abschlüsse mit eingegossen sein und verhindert eine Deformation der Filterpatrone im Falle eines zu großen Druckunterschiedes zwischen Roh- und Reinseite. Das Stützrohr ist entsprechend der Gestalt des Innenraums ebenfalls konisch ausgeführt. Dies bietet gleichzeitig den Vorteil einer vereinfachten Fertigung. Die konische Innenkontur des Stützrohrs kann nämlich gleichzeitig als Aushebeschräge für den Kerneinsatz des entsprechenden Spritzgießwerkzeuges dienen.

Eine Rundfilterpatrone gemäß Anspruch 7 weist die gleichen Vorteile wie oben genannt auf. Sie ist zum Einbau in ein Filtergehäuse gemäß Anspruch 1 geeignet.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben. Hierbei zeigen
- Figur 1: den Mittelschnitt durch ein Filtergehäuse, in das die erfindungsgemäße Rundfilterpatrone mit Stützrohr eingebaut ist,
- Figur 2: die perspektivische Ansicht eines Ausschnitts der gefalteten Filterbahn, wobei diese bereits in die ringförmige Gestalt gebogen ist, die die Filterbahn in der Rundfilterpatrone einnimmt und
- Figur 3-5: verschiedene Varianten für die Einbringung von Falten in die Filterbahn, wobei diese als Aufsicht auf die ungefaltete Filterbahn dargestellt sind.

### Beschreibung der Ausführungsbeispiele

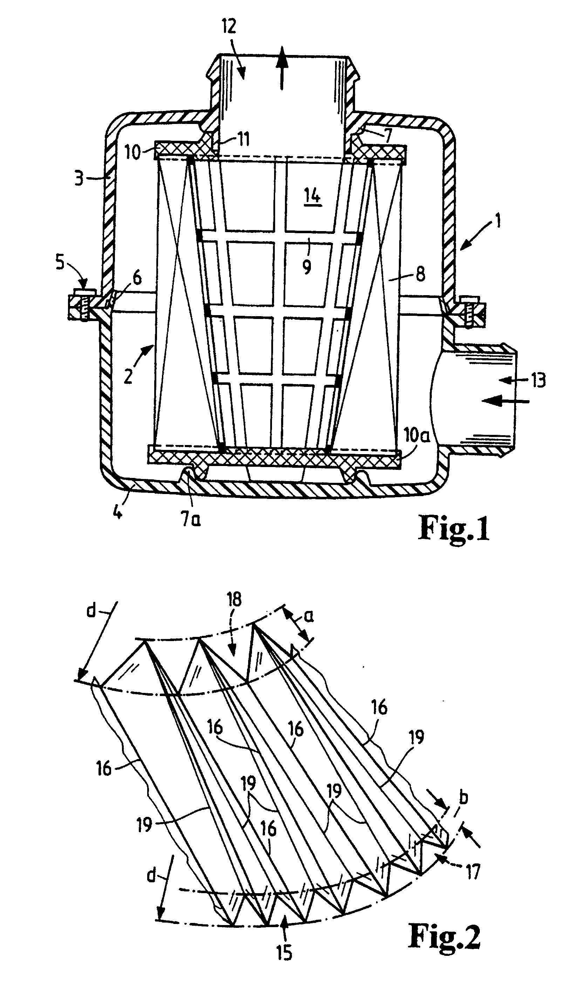

Das in Figur 1 dargestellte Filter besteht aus einem Gehäuse 1 und einer Rundfilterpatrone 2. Das Gehäuse ist topfförmig aufgebaut und läßt daher einen Wechsel der Filterpatrone 2 zu. Oberschale 3 und Unterschale 4 werden durch Verbindungsmittel 5 zusammengehalten, wobei die Dichtung zwischen den Gehäuseteilen z. B. durch eine an die Unterschale angespritzte Dichtlippe 6 gewährleistet sein kann. Im Gehäuseinneren sind Absätze 7, 7a vorgesehen, die für eine axiale und radiale Fixierung der Filterpatrone verantwortlich sind. Die Rundfilterpatrone 2 besteht aus einem gefaltetem Filtermedium 8 und einem gitterförmigen Stützrohr 9 welche in die Abschlüsse 10 und 10a eingegossen sind. Der obere Abschluß weißt eine Öffnung auf, die auf einen Anschlußstutzen 11 im Inneren des Filtergehäuses geschoben werden kann. Der Anschlußstutzen 11 ist mit einem Auslaß 12 für das gefilterte Medium verbunden.

Das zu filternde Fluid wird durch einen Einlaß 13 in das Gehäuse geleitet, durchdringt das Filtermedium 8 von außen nach innen und verläßt durch einen konischen Innenraum 14 über den Auslaß 12 gereinigt das Filtergehäuse. Die Abdichtung zwischen Rohseite und Reinseite des Filters erfolgt durch die elastisch ausgeführten Abschlüsse 10, 10a. Der untere Abschluß 10a verschließt die untere Öffnung des konischen Innenraums 14 vollständig. Die Dichtung am oberen Abschluß 10 kommt durch Aufstecken der Rundfilterpatrone 2 auf den Anschlußstutzen 11 zustande.

Der Figur 2 ist die räumliche Ausbildung einer Faltvariante einer Filterbahn 15 zu entnehmen, die zur Erzeugung der Rundfilterpatrone 2 mit konischem Innenraum 14 geeignet ist. Diese Rundfilterpatrone weist den Außendurchmesser d auf. Dieser wird durch Außenkanten 16 der Filterfalten gebildet. Da die Rundfilterpatrone außen zylindrisch ist. bleibt der Durchmesser d über die Länge der Filterpatrone konstant. Die Faltenhöhe der Filterfalten verringert sich jedoch von der Länge a am einen Ende der Filterfalten zu einer Länge b am anderen Ende der Filterfalten. Dies wird dadurch erreicht, daß auf der einen Stirnseite 17 der Filterpatrone doppelt so viele Falten am Umfang angeordnet sind wie auf der anderen Stirnseite 18. Dadurch ergibt sich die halbe Faltenhöhe auf der Stirnseite 17 (b=a/2). Auf diese Weise wird durch Innenkanten 19 der konische Innenraum 14 der Filterpatrone 2 gebildet, wobei der größere Durchmesser auf der Stirnseite 17 erzielt wird.

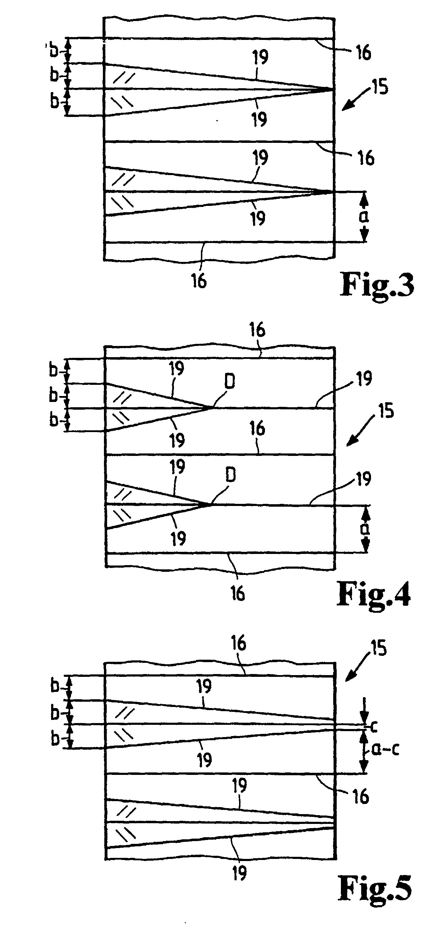

In den Figuren 3 bis 5 sind verschiedene Faltgeometrien für die Filterbahn 15 dargestellt. Gerade und schräge Filterkanten wechseln miteinander ab. Die schrägen Filterkanten bilden die Innenkanten 19 der Filterpatrone. Jede zweite der geraden Filterkanten bildet jeweils eine Außenkante 16 der Filterpatrone 2. Auf der einen Seite ergibt sich dabei die Faltenhöhe a auf der anderen Seite die Faltenhöhe b. Bei der Faltgeometrie gemäß Figur 4 laufen die schrägen Falten im Punkt D mit denjenigen geraden Falten zusammen, die nicht die Außenkanten 16 der Filterpatrone bilden. Dadurch werden im Unterschied zu der in Figur 3 aufgeführten Variante die Innenkanten 19 teilweise von diesen geraden Faltkanten mitgebildet. Es ergibt sich dabei ein Innenraum 14 der Filterpatrone, der teilweise zylindrisch, teilweise konisch ausgebildet ist. Im zylindrischen Bereich kann somit aufgrund der größeren Faltenteilung das Filterpapier optimal genutzt werden. Der konische Bereich gewährleistet eine genügend große Austrittsöffnung.

In Figur 5 ist eine Faltvariante dargestellt, in der die schrägen Falten die geraden Falten nicht berühren. Dies hat fertigungstechnische Vorteile, die mit dem Faltverfahren für Filterbahnen zusammenhängen. Die Faltenhöhe b kann auch bei dieser Faltvariante beibehalten werden. Auf der anderen Seite ergibt sich jedoch eine zusätzliche kleine Falte mit der Faltenhöhe c. Die ursprüngliche Faltenhöhe a wird also um den Betrag von c verringert.

## Patentansprüche

1. Filter, umfassend ein Gehäuse (1) mit einem rohseitigen Eingang, einem reinseitigen Ausgang, in das eine mit einem gefalteten Filtermedium ausgestattete Rundfilterpatrone (2) derart eingesetzt ist, daß die Rohseite des Filters von der Reinseite des Filters dichtend getrennt ist, so daß das zu filternde Medium nur durch das Filtermedium (8) hindurch von der Reinseite zur Rohseite wechseln kann, **dadurch gekennzeichnet, daß** die Außenkanten (16) der Filterfalten auf einem Zylindermantel liegen und die einen Innenraum bildenden Innenkanten (19) der Filterfalten zumindest teilweise auf der Mantelfläche eines Konus liegen.

2. Filter nach Anspruch 1, **dadurch gekennzeichnet, daß** das gefaltete Filtermedium aus einer rechteckigen Filterbahn (15) besteht, welche zur Bildung der Rundfilterpatrone ringförmig zusammengeschlossen ist, wobei die Stirnseiten der Filterbahn mit je einem Abschluß (10, 10a) versehen sind.

3. Filter nach Anspruch 2, **dadurch gekennzeichnet, daß** gerade Filterkanten, die zu dem die Stirnseiten (17, 18) bildenden Rändern der rechteckigen Filterbahn (15) rechtwinkelig sind, sich mit schrägen Filterkanten, die zu dem die Stirnseiten (17, 18) bildenden Rändern der rechteckigen Filterbahn (15) nicht rechwinkelig sind, abwechseln, wobei jeweils zwei schräge Filterkanten, die eine gerade Filterkante einrahmen, durch diese als Symmerieachse aufeinander abbildbar sind.

4. Filter nach Anspruch 3, **dadurch gekennzeichnet, daß** die schrägen Filterfalten in geraden Filterfalten hineinlaufen.

5. Filter nach einem der vorherigen Ansprüche, **dadurch gekennzeichnet, daß** der Innenraum (14) an der kleineren stirnseitigen Öffnung von dem dortigen Abschluß (10a) vollständig verschlossen wird, und der Abschluß (10) auf der anderen Seite eine Öffnung aufweist, die mit dem reinseitigen Auslaß korrespondiert.

6. Filter nach einem der vorherigen Ansprüche, **dadurch gekennzeichnet, daß** die Abschlüsse (10, 10a) der Rundfilterpatrone (2) durch PUR-Schaum oder Folienendscheiben gebildet werden.

7. Filter nach einem der vorherigen Ansprüche, **dadurch gekennzeichnet, daß** die Filterpatrone ein konisches Stützrohr (9) im Innenraum (14) aufweist.

8. Rundfilterpatrone (2), **dadurch gekennzeichnet, daß** sein Filtermedium eine Faltung gemäß einer der Ansprüche 1-7 aufweist und einen konischen Innenraum (14) besitzt.

## Claims

1. Filter comprising a housing (1) with an inlet on the side of the unfiltered product and an outlet on the side of the filtered product, in which housing a roundfilter cartridge (2), which is equipped with a folded filter medium, is inserted in such a manner that the filter side of the unfiltered product is tightly separated from the side of the filtered product in such a manner that the medium to be filtered can only go from the side of the unfiltered product to the side of the filtered product by way of the filter medium, **characterized in that** the exterior edges (16) of the filter folds are located on the cylinder mantle and that the interior edges (19) forming an inner space , are located at least partially on the mantle surface of the cone.

2. Filter according to claim 1, **characterized in that** the folded filter medium comprises a rectangular filter web (15) which is annularly connected to form a round filter cartridge ; the front faces of the filter web being respectively equipped with a closing element.

3. Filter according to claim 2, **characterized in that** the straight filter edges which are perpendicular to the edges of the rectangular filter web (15) and which are forming the frontsides (17, 18) follow the tilted filteredges which are not perpendicular with respect to the edges of the rectangular filter web (15) forming the frontedges (17, 18); wherein respectively the two tilted filteredges, which are enframing a straight filteredge, can be reproduced one on another by means of the said edge as symetrical axis.

4. Filter according to claim 3, **characterized in that** the tilted filter folds are introduced in the straight filter folds.

5. Filter according to one of the preceding claims, **characterized in that** the inner space (14) is completely closed by the closing situated there on the smallest opening of the frontside and **in that** closings (10) comprises an opening of the other side which corresponds to the outlet on the side of the filtered product.

6. Filter according to one of the preceding claims, **characterized in that** the closings (10, 110a) of the round filter cartridge (2) are constituted by PUR foam or by film end discs .

7. Filter according to one of the preceding claims, **characterized in that** the filter cartridge comprises a conical support tube in the inner space.

8. Round filter cartridge (2) **characterized in that** the filter medium comprises a fold according to on of the claims 1 - 7 and an conical inner space (14).

## Revendications

1. Filtre comportant un boîtier (1) avec une entrée située du coté du produit non filtré, une sortie située du coté du produit filtré, dans lequel boîtier on a inséré une cartouche de filtre ronde pourvue d'un moyen de filtre plié de manière à ce que le coté du produit non filtré soit séparé de façon étanche du coté du produit filtré du filtre de sorte que le produit devant être filtré ne puisse être transféré que par le moyen de filtre (8) à partir du coté du produit non filtré vers le coté du produit filtré, **caractérisé en ce que** les bords extérieurs (16) des plis du filtre se trouvent sur une enveloppe de cylindre et **en ce que** les bords intérieurs (19) des plis du filtre formant un espace intérieur se trouvent au moins partiellement sur la surface d'une cône .

2. Filtre selon la revendication 1, **caractérisé en ce que** le moyen de filtre plié est composé d'une bande de filtre (15) rectangulaire qui est fermée de manière annulaire pour former la cartouche de filtre ronde ; les cotés avant de la bande de filtre étant pourvus chacun d'une fermeture (10, 10a).

3. Filtre selon la revendication 2, **caractérisé en ce que** des bords de filtre droits qui sont perpendiculaire par rapport aux bords de la bande de filtre rectangulaire (15) formant les cotés frontaux (17, 18) succèdent aux bords de filtre obliques qui ne sont pas perpendiculaires par rapport aux bords de la bande de filtre rectangulaire (15) formant les cotés frontaux (17, 18); où les deux bords de filtre obliques encadrant à chaque fois un bord de filtre droit et pouvant être reproduit l'un sur l'autre grâce au bord en tant qu'axe de symétrie .

4. Filtre selon la revendication 3, **caractérisé en ce que** les plis obliques du filtre s'introduisent dans les plis de filtre droits.

5. Filtre selon une des revendications précédentes, **caractérisé en ce que** l'espace intérieur (14) est fermé complètement au niveau de la plus petite ouverture du coté frontal par la fermeture se trouvant à cet endroit et **en ce que** la fermeture (10) comporte une ouverture sur l'autre coté qui correspond à la sortie du coté du produit filtré.

6. Filtre selon une des revendications précédentes, **caractérisé en ce que** les fermetures (10, 10a) de la cartouche de filtre ronde (2) sont formées par de la mousse PUR ou des disques extrêmes en feuille.

7. Filtre selon une des revendications précédentes, **caractérisé en ce que** la cartouche de filtre présente un tube d'appui (9) conique de l'espace intérieur.

8. Cartouche de filtre ronde (2) **caractérisé en ce que** son moyen de filtre présente un pli selon une des revendications 1 à 7 et un espace intérieur (14) conique.
